# EUROPÄISCHE PATENTSCHRIFT

(11) **EP 3 357 317 B1**
(45) Veröffentlichungstag und Bekanntmachung des Hinweises auf die Patenterteilung: **02.10.2019**
(21) Anmeldenummer: 18401005.6
(22) Anmeldetag: 22.01.2018
(51) Int. Cl.: A01C 5/06, A01C 7/06

(54) **SCHARANORDNUNG FÜR EINE SÄMASCHINE**
COULTER ASSEMBLY FOR A SOWING MACHINE
ASSEMBLAGE DU SOC POUR UN SEMOIR

(30) Priorität: 07.02.2017 DE 102017102309; 17.03.2017 DE 102017105753
(43) Veröffentlichungstag der Anmeldung: 08.08.2018
(73) Patentinhaber: Amazonen-Werke H. Dreyer GmbH & Co. KG, 49205 Hasbergen (DE)
(72) Erfinder: Bohlen, Eike, 28215 Bremen (DE)

(56) Entgegenhaltungen:
- EP-A1- 0 291 901
- WO-A1-2016/048167
- CA-A- 1 127 012
- DE-A1-102009 006 681
- US-A1- 2006 169 189
- US-A1- 2015 230 391

## Beschreibung

Die Erfindung betrifft eine Scharanordnung für eine Sämaschine nach dem Oberbegriff des Patentanspruchs 1 und eine Sämaschine nach dem Oberbegriff des Patentanspruchs 10.

Eine derartige Scharanordnung für eine Sämaschine und eine Sämaschine sind in der EP 0 291 901 A1 und der US 2006/0169189 A1 beschrieben.

Gattungsgemäße Scharanordnungen weisen üblicherweise ein Säschar zur Ablage von Saatgut und ein Düngerschar zur Ablage von Dünger auf. Das Säschar kann dabei an einer beweglichen Scharaufhängung befestigt sein, wobei die Saatgut-Ablagetiefe durch höhenverstellbare Tragrollen des Säschars einstellbar ist. Das Düngerschar kann an einem beweglichen Tragarm befestigt sein, welcher die Einstellung der Dünger-Ablagetiefe erlaubt.

Um optimale Wachstumsbedingungen für das abgelegte Saatgut zu schaffen, ist ein geeignetes Verhältnis der Ablagetiefen von Saatgut und Dünger während des Ausbringvorgangs einzuhalten.

Aus der Druckschrift DE 10 2009 006 681 A1 ist eine Sämaschine bekannt, deren Scharanordnungen jeweils ein an einem Parallelogramm-Gestänge aufgehängtes Säschar und ein separat befestigtes Düngerschar aufweisen. Das Säschar und das Düngerschar sind durch eine Kette miteinander verbunden und weisen eine gemeinsame Schardruckverstellung auf.

Ähnliche Scharanordnungen, bei welchen das Verhältnis der Saatgut-Ablagetiefe und der Dünger-Ablagetiefe einstellbar ist, sind aus den Druckschriften EP 2 022 307 A1 WO 2016/048167 A1 und DE 10 2007 028 193 A1 bekannt.

Darüber hinaus offenbart die Druckschrift DE 10 2013 111 357 B4 eine Scharanordnung, bei welcher das Säschar und das Düngerschar unabhängig voneinander aufgehängt sind und über ein gemeinsames Element in der Tiefe geführt werden.

Ferner ist aus der US 2015/0230391 A1 eine Sämaschine bekannt, deren Düngerschare jeweils über eine spannschlossartige Kopplungseinrichtung mit einem Parallelogramm-Gestänge, an welchem ein Säschar angeordnet ist, verbunden ist.

Eine weitere Sämaschine ist in der DE 10 2009 006 681 A1 beschrieben. Bei dieser Sämaschine kann die Eindringtiefe der Säschare mittels eines vor den Düngerscharen zwischen dem Rahmen und einem an einem Querbalken angeordneten Hebel vorgesehenem Hydraulikzylinder eingestellt werden. Die Düngerschare sind hierbei über eine als Kette ausgeführte Kopplungseinrichtung an die Bewegungen der Säschare gekoppelt.

Diese und andere bekannte Scharanordnungen haben jedoch den Nachteil, dass das eingestellte Tiefenverhältnis von Säschar und Düngerschar während des Ausbringvorgangs nicht mit einer ausreichenden Präzision eingehalten werden kann, die Einstellung des Tiefenverhältnisses den Anpressdruck des Säschars und/oder des Düngerschars beeinflusst oder beschränkt oder die eingesetzte Mechanik einen zu hohen Fertigungsaufwand bedingt oder gegenüber mechanischen Belastungen nicht ausreichend robust ist.

Die der Erfindung zugrunde liegende Aufgabe besteht somit darin, die gemeinsame Ablage von Saatgut und Dünger zu verbessern.

Die Aufgabe wird gelöst durch eine Scharanordnung für eine Sämaschine der eingangs genannten Art, wobei die längenveränderliche Kopplungseinrichtung ein Federelement umfasst.

Die Erfindung macht sich die Erkenntnis zunutze, dass durch eine längenveränderliche Kopplungseinrichtung das Säschar und das Düngerschar relativ zueinander ausgerichtet werden können. Die Konfiguration der Scharanordnung lässt sich somit an unterschiedliche Bodenbeschaffenheiten und Ablageerfordernisse des Saatguts und des Düngers anpassen, wodurch die Saatgut- und Düngerausbringung verbessert wird. Dadurch, dass die Bewegung der Säscharaufhängung und die Bewegung des Tragarms über die längenveränderliche Kopplungseinrichtung miteinander gekoppelt sind, kann außerdem die Höhendifferenz und/oder die seitliche Beabstandung des Säschars und des Düngerschars konstant gehalten werden, wenn die Ablagetiefe des Saatguts verstellt wird. Ist beispielsweise eine Saatgut-Ablagetiefe von 5 Zentimetern und eine Dünger-Ablagetiefe von 10 Zentimetern eingestellt, so erfolgt bei einer Verstellung der Saatgut-Ablagetiefe auf 7 Zentimeter automatische eine Veränderung der Dünger-Ablagetiefe auf 12 Zentimeter. Die Erfindung schafft somit die Möglichkeit, das einstellbare Verhältnis der Ablagetiefen von Saatgut und Dünger in einfacher Weise konstant zu halten. Die erfindungsgemäße Scharanordnung erlaubt außerdem die Anpassung des Düngerschars und des Säschars an Feldkonturen, welche beispielsweise gekrümmte Oberflächen aufweisen können.

Das Düngerschar und das Säschar sind vorzugsweise seitlich versetzt zueinander angeordnet, sodass der Dünger seitlich versetzt von dem Saatgut abgegeben wird. Das Säschar ist vorzugsweise Bestandteil eines Säaggregats, welches an der Säscharaufhängung befestigt ist. Durch die Säscharaufhängung kann das gesamte daran befestigte Säaggregat nach oben ausgelenkt werden. Das an der Säscharaufhängung befestigte Säaggregat kann neben dem Säschar eine oder mehrere Tragrollen zum Abstützen der Scharanordnung gegenüber dem Boden, eine Fangrolle zum Auffangen und Andrücken des abgegebenen Saatguts und/oder eine oder mehrere Andruckrollen zum Bedecken der Saatfurche mit Boden und zum Andrücken des Bodens über der zugedeckten Saatfurche umfassen.

In einer bevorzugten Ausführungsform der erfindungsgemäßen Scharanordnung ist die längenveränderliche Kopplungseinrichtung an der Säscharaufhängung und an dem Tragarm befestigt. Die Befestigung der längenveränderlichen Kopplungseinrichtung an der Säscharaufhängung und/oder an dem Tragarm erfolgt beispielsweise über reversibel und zerstörungsfrei lösbare Befestigungselemente, wie beispielsweise Schrauben, Bolzen, Stifte oder Splinte. Vorzugsweise weist die längenveränderliche Kopplungseinrichtung eine längliche Grundform auf, wobei ein erstes Ende der längenveränderlichen Kopplungseinrichtung an der Säscharaufhängung und ein zweites gegenüberliegendes Ende an dem Tragarm befestigt ist.

Die erfindungsgemäße Scharanordnung wird ferner dadurch vorteilhaft weitergebildet, dass die längenveränderliche Kopplungseinrichtung einen Hydraulikzylinder umfasst. Das Federelement kann eine Schraubenfeder umfassen oder als Schraubenfeder ausgebildet sein. Durch das Federelement kann die längenveränderliche Kopplungseinrichtung gleichzeitig als Überlastsicherung für das Düngerschar fungieren. Bei Verwendung eines Hydraulikzylinders ist dieser vorzugsweise vollständig ausgefahren, wenn kein Überlastzustand vorliegt. Die Überlastsicherung erlaubt eine Schwenkbewegung des Düngerschars nach oben, ohne dass das Säschar oder die Säscharaufhängung durch diese Schwenkbewegung wesentlich ausgelenkt werden. Insbesondere beim Kontakt des Düngerschars mit hervorstehenden Steinen kann somit eine Beschädigung der Scharanordnung vermieden werden. Durch das Federelement der längenveränderlichen Kopplungseinrichtung wird das Düngerschar nach dem Passieren eines hervorstehenden Steins wieder in die ursprüngliche Position zurückbewegt.

In einer anderen Ausführungsform der erfindungsgemäßen Scharanordnung sind die Kopplungseigenschaften der längenveränderlichen Kopplungseinrichtung einstellbar. Die Kopplungseigenschaften der längenveränderlichen Kopplungseinrichtung können beispielsweise die horizontale und/oder vertikale Beabstandung des Säschars und des Düngerschars und/oder die auf den Tragarm des Düngerschars ausgeübte Druckkraft umfassen. Wenn die längenveränderliche Kopplungseinrichtung ein Federelement aufweist, können auch die Federungseigenschaften einstellbar sein. Wenn die längenveränderliche Kopplungseinrichtung einen Hydraulikzylinder aufweist, kann auch der Hydraulikdruck einstellbar sein.

In einer weiteren bevorzugten Ausführungsform der erfindungsgemäßen Scharanordnung sind die Maximallänge und/oder die Minimallänge der längenveränderlichen Kopplungseinrichtung einstellbar. Durch die Einstellung der der Maximallänge der längenveränderlichen Kopplungseinrichtung wird die Beabstandung des Säschars und des Düngerschars eingestellt.. Die Einstellung der Maximallänge der längenveränderlichen Kopplungseinrichtung dient somit der Einstellung des Verhältnisses der Saatgut-Ablagetiefe und der Dünger-Ablagetiefe. Das optimale Verhältnis der Saatgut-Ablagetiefe und der Dünger-Ablagetiefe kann beispielsweise von dem Saatgut, dem Dünger und/oder den Bodenbeschaffenheiten abhängig sein. Durch die Einstellung der Minimallänge der längenveränderlichen Kopplungseinrichtung kann die maximale Verkürzung der längenveränderlichen Kopplungseinrichtung in einem Überlastfall, beispielsweise bei einer Kollision des Düngerschars mit einem feststehenden Hindernis, eingestellt werden. Die Einstellung der Minimallänge der längenveränderlichen Kopplungseinrichtung dient somit der Einstellung der Eigenschaften der Überlastsicherung.

Die erfindungsgemäße Scharanordnung wird außerdem dadurch weitergebildet, dass der Anlenkpunkt der längenveränderlichen Kopplungseinrichtung an der Säscharaufhängung und/oder an dem Tragarm veränderbar ist. Vorzugsweise ist der Anlenkpunkt der längenveränderlichen Kopplungseinrichtung an dem Unterlenker der Säscharaufhängung veränderbar. Insbesondere weist die Säscharaufhängung eine Befestigungsplatte mit mehreren Durchgangslöchern auf, wobei der Anlenkpunkt der längenveränderlichen Kopplungseinrichtung an der Säscharaufhängung dadurch verändert werden kann, dass ein Befestigungselement der längenveränderlichen Kopplungseinrichtung, wie etwa ein Splint, ein Bolzen oder ein Stift, mit den mehreren Durchgangslöchern der Befestigungsplatte in Eingriff bringbar ist. Somit kann beispielsweise mittels eines manuellen Umsteckens des Befestigungselements der Anlenkpunkt der längenveränderlichen Kopplungseinrichtung an der Säscharaufhängung verändert werden. Durch das Verändern des Anlenkpunkts der längenveränderlichen Kopplungseinrichtung an der Säscharaufhängung kann somit auf einfache Weise die Ablagetiefe des Düngers eingestellt werden.

Bevorzugt ist außerdem eine erfindungsgemäße Scharanordnung, bei welcher die längenveränderliche Kopplungseinrichtung eine Druckkraft zwischen der Säscharaufhängung und dem Tragarm verursacht, wobei die Druckkraft vorzugsweise einstellbar ist. Die Einstellung der Druckkraft zwischen der Säscharaufhängung und dem Tragarm dient der Einstellung der Bewegungscharakteristik der Überlastsicherung. Die Überlastkraft kann beispielsweise mittels eines geeigneten Werkzeugs oder werkzeuglos erfolgen. Wenn die längenveränderliche Kopplungseinrichtung ein Federelement aufweist, kann die Druckkrafteinstellung beispielsweise über eine Stauchung oder Streckung des Federelements erfolgen.

Die Einstellung der Druckkraft zwischen der Säscharaufhängung und dem Tragarm kann in einer weiteren Ausführungsform der Erfindung auch der Einstellung des Anpressdrucks, welchen das Düngerschar auf den Boden ausübt, dienen. Auf diese Weise kann eine weitere Anpassung der Scharanordnung an die Bodenbeschaffenheit erfolgen.

In einer besonders bevorzugten Weiterbildung der erfindungsgemäßen Scharanordnung umfasst die Säscharaufhängung ein Parallelogramm-Gestänge. Parallelogramm-Gestänge eignen sich in besonderer Weise für die Aufhängung von Säscharen, da Parallelogramm-Gestänge für eine hohe Laufruhe sorgen und ein geringes Beschädigungsrisiko bei mechanischer Belastung aufweisen.

In einer weiteren bevorzugten Ausführungsform der erfindungsgemäßen Scharanordnung umfasst das Parallelogramm-Gestänge einen Oberlenker und einen Unterlenker, wobei die Kopplungseinrichtung mit dem Unterlenker verbunden ist. Vorzugsweise befindet sich der Anlenkpunkt der längenveränderlichen Kopplungseinrichtung auf der dem Säschar abgewandten Hälfte des Unterlenkers des Parallelogramm-Gestänges.

Erfindungsgemäß ist außerdem die Scharanordnung, bei welcher die Säscharaufhängung und der Tragarm an einem gemeinsamen Querbalken befestigt sind. Der Querbalken verläuft vorzugsweise quer zur Fahrtrichtung der Scharanordnung bzw. der Sämaschine, in welcher die Scharanordnung integriert ist. Durch die Befestigung der Säscharaufhängung und des Tragarms an einem gemeinsamen Querbalken wird die Endmontage vereinfacht, wodurch letztendlich die Herstellungskosten gesenkt werden. Der Querbalken kann dazu eingerichtet sein, eine Befestigung von Bauteilen an zwei gegenüberliegenden Seiten zu erlauben. Vorzugsweise weist der Querbalken gegenüberliegende Befestigungsabschnitte auf, wobei die gegenüberliegenden Befestigungsabschnitte spiegelsymmetrisch gegenüber einer vertikalen und/oder quer zur Fahrtrichtung verlaufenden Spiegelebene ausgebildet sein können. An einem derartigen Querbalken können Bauteile sowohl an der Vorderseite als auch an der Hinterseite befestigt werden. So können beispielsweise vor einzelnen Säaggregaten Spurlockerer angeordnet werden, um den von den Traktorreifen verdichteten Boden vor der Ablage des Düngers und des Saatguts aufzulockern. Der Querbalken kann ferner seitlich teleskopierbar ausgebildet sein. Durch die seitliche Teleskopierbarkeit kann die Gesamtbereite der Sämaschine beeinflusst werden. Ferner kann der Querbalken das Verschieben der an dem Querbalken befestigten Bauteile erlauben. Durch eine solche Verschiebbarkeit wird die Anpassbarkeit der entsprechenden Sämaschine erheblich erhöht.

Die der Erfindung zugrunde liegende Aufgabe wird ferner durch eine Sämaschine der eingangs genannten Art gelöst, wobei die eine Scharanordnung oder die mehreren Scharanordnungen jeweils nach einer der vorstehend beschriebenen Ausführungsformen ausgebildet sind. Vorzugsweise sind mehrere Scharanordnungen beabstandet voneinander an einem gemeinsamen Querbalken befestigt, welcher quer zur Fahrtrichtung der Sämaschine verläuft. Hinsichtlich weiterer Modifikationen und Vorteile der erfindungsgemäßen Sämaschine wird auf die Modifikationen und Vorteile der erfindungsgemäßen Scharanordnung verwiesen.

Weitere Einzelheiten der Erfindung sind der Figurenbeschreibung und den Zeichnungen zu entnehmen. Es zeigen
- Fig. 1: mehrere an einem Querbalken befestigte erfindungsgemäße Scharanordnungen in einer perspektivischen Darstellung;
- Fig. 2: ein Ausführungsbeispiel der erfindungsgemäßen Scharanordnung in einem ersten Zustand;
- Fig. 3: die Scharanordnung aus der Fig. 2 in einem zweiten Zustand;
- Fig. 4: die Scharanordnung aus der Fig. 2 und der Fig. 3 in einem dritten Zustand; und
- Fig. 5: eine Säscharaufhängung einer erfindungsgemäßen Scharanordnungen in einer perspektivischen Darstellung.

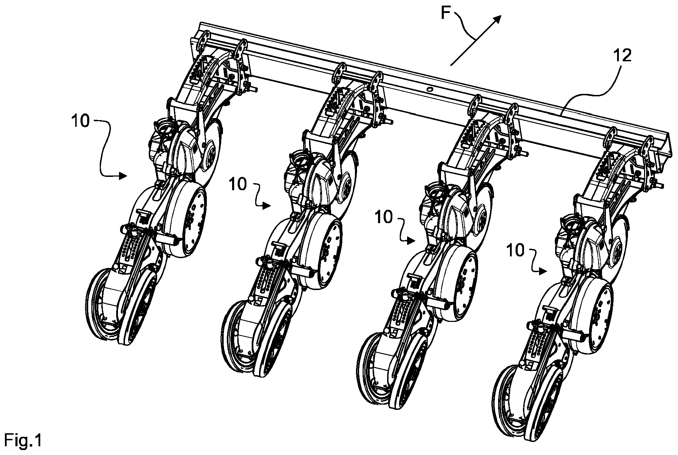

Die Fig. 1 zeigt vier Scharanordnungen 10 einer Sämaschine. Die Scharanordnungen 10 sind entlang einer Reihe angeordnet, welche quer zur Fahrtrichtung F der Sämaschine verläuft.

Die Scharanordnungen 10 sind jeweils an einem gemeinsamen Querbalken 12 befestigt, welcher ebenfalls quer zur Fahrtrichtung F der Sämaschine verläuft.

Die Scharanordnungen 10 sind jeweils dazu eingerichtet, Saatgut und Dünger auf einem zu bewirtschaftenden Boden seitlich versetzt zueinander und in einem geeigneten einstellbaren Tiefenverhältnis abzulegen.

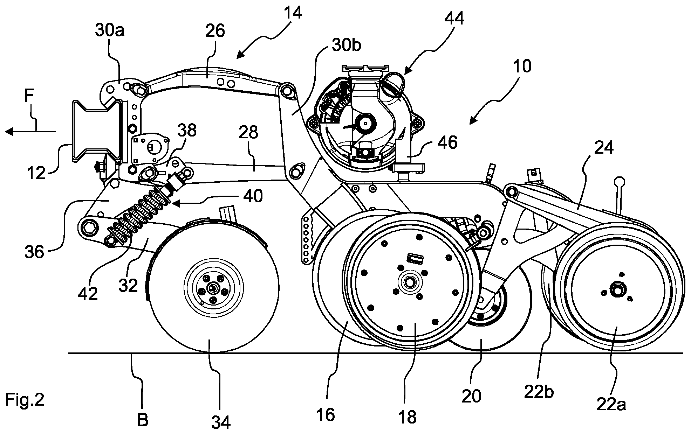

Die Scharanordnungen 10 können beispielsweise jeweils entsprechend der in den Fig. 2 bis Fig. 4 dargestellten Scharanordnung ausgebildet sein.

Die Fig. 2 zeigt eine Scharanordnung 10 für eine Sämaschine mit einer beweglichen Säscharaufhängung 14, wobei an der Säscharaufhängung 14 ein Säaggregat befestigt ist. Durch die Säscharaufhängung 14 kann das daran befestigte Säaggregat aus der dargestellten Position nach oben ausgelenkt werden.

Das an der Säscharaufhängung 14 befestigte Säaggregat umfasst eine Kornvereinzelungseinrichtung 44, ein Säschar 16, zwei Tragrollen 18, eine Fangrolle 20 und zwei Andruckrollen 22a, 22b.

Die Kornvereinzelungseinrichtung 44 dient der Vereinzelung der Saatgutkörner. Die Kornvereinzelungseinrichtung 44 kann beispielsweise mit einer Druckdifferenz arbeiten. Beispielsweise arbeitet die Kornvereinzelungseinrichtung 44 nach dem Prinzip der Überdruck-Vereinzelung oder nach dem Prinzip der Saugluftvereinzelung.

Die Kornvereinzelungseinrichtung 44 kann eine Vereinzelungstrommel aufweisen, wobei die Vereinzelung der Körner je nach Maschine und Reihenweite für 6 bis 16 Reihen gleichzeitig über eine Vereinzelungstrommel erfolgt. Die Vereinzelungstrommel weist Bohrungen auf, an welchen verstellbare Abstreifereinheiten angeordnet sind. Die Abstreifereinheiten sorgen für eine vereinzelte Abgabe der Körner an die Kornzuführung 46, welche die vereinzelten Körner dem Säschar 16 zur Ablage auf den Boden B zuführt. Der Einsatz von Vereinzelungstrommeln führt zu einer kompakten Bauweise einer Sämaschine.

Alternativ kann die Kornvereinzelungseinrichtung 44 eine Vereinzelungsscheibe und einen Abstreifer aufweisen. Die Körner werden dabei zu Noppenbohrungen der Vereinzelungsscheibe transportiert und dem Abstreifer zugeführt. Die Noppenbohrungen können über die Scheibenoberfläche hinausragen und somit den Saatgutvorrat in Bewegung versetzen. Die Noppenbohrungen können konisch ausgeführt sein, sodass eine Verstopfung durch Bruchkornanteile vermieden wird. Der Einsatz von Vereinzelungsscheiben führt aufgrund des individuellen Antriebs pro Reihe zu einer höheren Anpassbarkeit der Sämaschine. Zur Kontrolle des Betriebs der Kornvereinzelungseinrichtung 44 kann ein großes Sichtfenster und/oder ein im Gehäuse positionierter Optogeber eingesetzt werden.

Das Säschar 16 kann Schneidscheiben aufweisen und beispielsweise als Doppelscheiben-Säschar ausgebildet sein. Die beiden Scheiben des Säschars 16 können V-förmig zueinander angestellt sein, sodass die Bodenoberfläche durchschnitten und Pflanzenreste zur Seite geräumt werden. Das Säschar 16 kann außerdem einen Furchenformer aufweisen, welcher eine Furche freiräumt und im Unterboden festdrückt. Die gewünschte Saatgut-Ablagetiefe lässt sich durch eine Verstellung der Tragrollen 18 individuell einstellen. Die Einstellung kann unabhängig von der Einstellung der Tragrollen 18 von seitlich benachbarten Säaggregaten erfolgen, sodass sich auch einzelne Säschare, beispielsweise in einer Schlepperspur, tiefer einstellen lassen.

Die zwei Tragrollen 18 stützen die gesamte Scharanordnung 10 gegenüber dem Boden B ab. Die Tragrollen 18 weisen jeweils eine breite Aufstandsfläche auf, wodurch ein guter Bodenkontakt und eine hohe Laufruhe gewährleistet werden. An der Lauffläche der Tragrollen 18 können Abstreiferelemente angeordnet sein, welche bei klebrigen Bodenverhältnissen für die Sauberkeit und somit für eine uneingeschränkte Funktionstüchtigkeit der Tragrollen 18 sorgen.

Die Fangrolle 20 ist unmittelbar hinter dem Furchenformer angeordnet. Die Fangrolle 20 fängt das ausgegebene Saatgut auf und drückt dieses in der Saatfurche an. Hierzu schließt die Fangrolle 20 unten und an den Seitenwänden formschlüssig mit der Saatfurche ab, so dass die Körner auch bei ungünstigen Bodenverhältnissen nicht verrollen, sondern zuverlässig aufgefangen und angedrückt werden. Da die Fangrolle direkt hinter dem Furchenformer angeordnet ist, bleibt die Ablagequalität auch bei zunehmender Fahrgeschwindigkeit konstant.

Die Andruckrollen 22a, 22b decken die Saatfurche mit Boden zu und drücken ihn über der zugedeckten Furche an. Der Andruckwinkel, der Öffnungswinkel und/oder die Öffnungsweite der Andruckrollen 22a, 22b können einstellbar sein, um die Andruckeigenschaften auf unterschiedliche Bodenverhältnisse anpassen zu können. Alternativ können auch Walkgummireifen eingesetzt werden, welche sich beispielsweise besonders für die Maissaat eignen.

Die Fangrolle 20 und die Andruckrollen 22a, 22b sind an einem Tragbalken 24 befestigt. Die Säscharaufhängung 14 umfasst ein Parallelogramm-Gestänge, wobei das Parallelogramm-Gestänge einen Oberlenker 26 und einen Unterlenker 28 umfasst. Der Oberlenker 26 und der Unterlenker 28 sind an einer ersten Seite an der Anlenkplatte 30a und an einer zweiten Seite an einer Anlenkplatte 30b angelenkt. Die Säscharaufhängung 14 ist über die Anlenkplatte 30a an einem Querbalken 12 befestigt, welcher quer zur Fahrtrichtung F der Sämaschine verläuft.

Die Scharanordnung 10 weist außerdem einen Düngerschar 34 zur Ablage von Dünger auf, wobei das Düngerschar 34 an einem beweglichen Tragarm 32 befestigt ist. Der Tragarm 32 ist über das Stegelement 36 an dem Querbalken 12 befestigt. Das Düngerschar 34 ist als Einscheiben-Düngerschar ausgebildet. Alternativ kann das Düngerschar 34 als Doppelscheibenschar ausgebildet sein.

Die Bewegung der Säscharaufhängung 14 und die Bewegung des Tragarms 32 sind über eine längenveränderliche Kopplungseinrichtung 40 miteinander gekoppelt. Durch die Kopplung beeinflusst die Bewegung der Säscharaufhängung 14 die Bewegung des Tragarms 32. Die längenveränderliche Kopplungseinrichtung 40 ist über ein Zwischenelement 38 an dem Unterlenker 28 der als Parallelogramm-Gestänge ausgebildeten Säscharaufhängung 14 und an dem Tragarm 32 befestigt.

Die längenveränderliche Kopplungseinrichtung 40 umfasst ein Federelement 42, welches als Schraubenfeder ausgebildet ist. Durch das Federelement 42 wird eine Überlastsicherung umgesetzt, welche eine Schwenkbewegung des Tragarms 32 und somit auch des Düngerschars 34 nach oben erlaubt, bevor die Federkraft des Federelements 42 eine Bewegung des Tragarms 32 und des Düngerschars 34 zurück in die Ausgangsposition verursacht. Die Kopplungseigenschaften der längenveränderlichen Kopplungseinrichtung 40, wie beispielsweise die Maximallänge und/oder die Minimallänge der längenveränderlichen Kopplungseinrichtung 40 und die Federeigenschaften des Federelements 42, sind einstellbar.

Die längenveränderliche Kopplungseinrichtung 40 verursacht eine Druckkraft zwischen der Säscharaufhängung 14 und dem Tragarm 32, wobei die Druckkraft einstellbar ist. Die Einstellung der Druckkraft dient der Einstellung der Bewegungscharakteristik der Überlastsicherung. Die Einstellung der Bewegungscharakteristik der Überlastsicherung kann außerdem durch die Auswahl eines Federelements mit einer geeigneten Federhärte und durch die Einstellung der Minimallänge der längenveränderlichen Kopplungseinrichtung 40 erfolgen. Durch die längenveränderliche Kopplungseinrichtung 40 können das Säschar 16 und das Düngerschar 34 relativ zueinander ausgerichtet werden.

In dem in der Fig. 2 dargestellten Zustand der Scharanordnung 10 ist die längenveränderliche Kopplungseinrichtung 40 derart eingestellt, dass die Dünger-Ablagetiefe wenige Zentimeter, beispielsweise 5 Zentimeter, unterhalb der Saatgut-Ablagetiefe liegt. Aufgrund der seitlich versetzten Anordnung des Düngerschars 34 und des Säschars 16 wird der Dünger außerdem seitlich versetzt von dem Saatgut abgegeben.

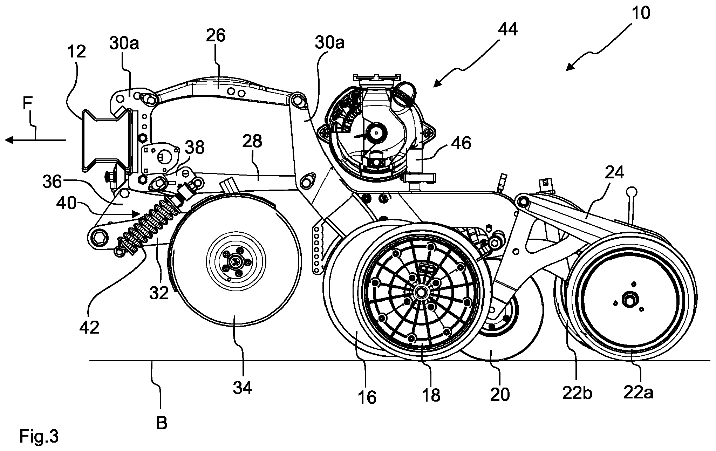

In dem in der Fig. 3 dargestellten Zustand der Scharanordnung 10 ist die längenveränderliche Kopplungseinrichtung 40 auf eine Minimallänge verkürzt Dieser Zustand kann durch das Auftreffen des Düngerschars 34 auf einen im Boden B befindlichen Stein hervorgerufen werden. Durch die Längenveränderlichkeit der Kopplungseinrichtung 40 kann der Tragarm 32 samt dem Düngerschar 34 nach oben verschwenkt werden. Nach Passieren des Steins sorgt die Federkraft des Federelements 42 dafür, dass der Tragarm 32 und das Düngerschar 34 wieder auf die eingestellte Position zurückbewegt werden, sodass der Dünger wieder in der eingestellten Ablagetiefe abgegeben wird.

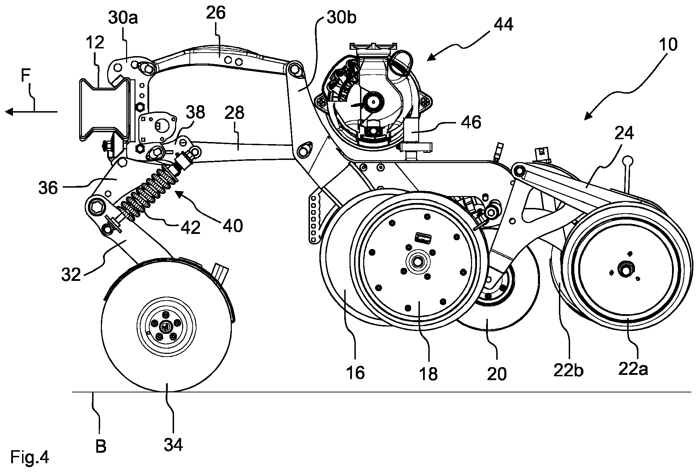

In dem in der Fig. 4 dargestellten Zustand der Scharanordnung 10 weist die längenveränderliche Kopplungseinrichtung 40 eine Maximallänge auf. Das Federelement 42 liegt in dem dargestellten Zustand nicht mehr an dem Federanschlag an, sodass das Federelement 42 nicht gespannt ist und keinen Anpressdruck des Düngerschars 34 auf dem Boden B erzeugt. Der dargestellte Zustand kann beispielsweise durch das Auftreffen des Säschars 16 auf ein ein Hindernis, wie beispielweise ein im Boden B befindlicher Stein, hervorgerufen werden. Dabei hat das Düngerschar 34 den Stein bereits passiert. Das nachfolgende Säaggregat wird durch das auf den Stein treffende Säschar 16 nach oben ausgelenkt, wohingegen das Düngerschar 34 nicht wesentlich ausgelenkt wird.

Der in Fig. 4 dargestellte Zustand kann alternativ zu Wartungs- oder Reparaturarbeiten eingestellt werden, damit das von dem Federelement 42 ausgehenden Verletzungsrisiko verringert wird.

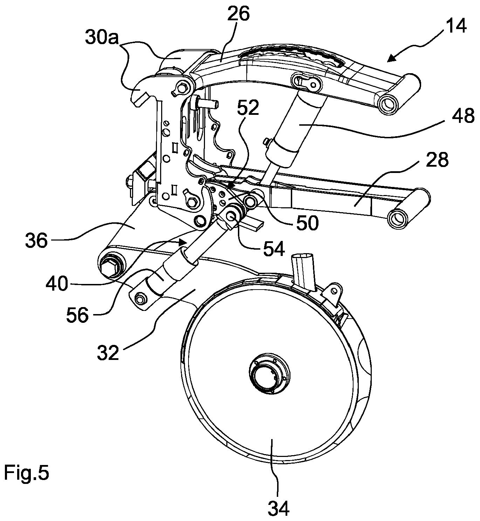

Die Fig. 5 zeigt eine Säscharaufhängung 14. Aus der Darstellung wird ersichtlich, dass der Oberlenker 26 und der Unterlenker 28 des Parallelogramm-Gestänges über ein Verbindungselement 48 miteinander gekoppelt sind. Das Verbindungselement 48 umfasst einen Hydraulikzylinder.

Der Anlenkpunkt der längenveränderlichen Kopplungseinrichtung 40 an dem Unterlenker 28 ist über eine Befestigungsplatte 50 veränderbar, wobei die längenveränderliche Kopplungseinrichtung 40 einen Hydraulikzylinder 56 umfasst. Die Befestigungsplatte 50 weist mehrere Durchgangslöcher 52 auf, wobei der Anlenkpunkt der längenveränderlichen Kopplungseinrichtung 40 an der Befestigungsplatte 50 dadurch verändert werden kann, dass ein als Bolzen ausgebildetes Befestigungselement 54 der längenveränderlichen Kopplungseinrichtung 40 mit den mehreren Durchgangslöchern 52 der Befestigungsplatte 50 in Eingriff bringbar ist. Hierdurch kann mittels eines manuellen Umsteckens des Befestigungselements 54 der Anlenkpunkt der längenveränderlichen Kopplungseinrichtung 40 verändert werden.

### Bezugszeichenliste

- 10: Scharanordnung
- 12: Querbalken
- 14: Säscharaufhängung
- 16: Säschar
- 18: Tragrolle
- 20: Fangrolle
- 22a, 22b: Andruckrollen
- 24: Tragbalken
- 26: Oberlenker
- 28: Unterlenker
- 30a, 30b: Anlenkplatten
- 32: Tragarm
- 34: Düngerschar
- 36: Stegelement
- 38: Zwischenelement
- 40: Kopplungseinrichtung
- 42: Federelement44 Kornvereinzelungseinrichtung
- 46: Kornzuführung
- 48: Verbindungselement
- 50: Befestigungsplatte
- 52: Durchgangslöcher
- 54: Befestigungselement
- 56: Hydraulikzylinder

- F: Fahrtrichtung
- B: Boden

## Patentansprüche

1. Scharanordnung (10) für eine Sämaschine, mit
- einem Säschar (16) zur Ablage von Saatgut, wobei das Säschar (16) an einer beweglichen Säscharaufhängung (14) befestigt ist; und
- einem Düngerschar (34) zur Ablage von Dünger, wobei das Düngerschar (34) an einem beweglichen Tragarm (32) befestigt ist
wobei die Säscharaufhängung (14) und der Tragarm (32) an einem gemeinsamen Querbalken (12) befestigt sind; und
wobei die Bewegung der Säscharaufhängung (14) und die Bewegung des Tragarms (32) über eine längenveränderliche Kopplungseinrichtung (40) miteinander gekoppelt sind, **dadurch gekennzeichnet, dass** die längenveränderliche Kopplungseinrichtung (40) ein Federelement (42) umfasst.

2. Scharanordnung (10) nach Anspruch 1,
**dadurch gekennzeichnet, dass** die längenveränderliche Kopplungseinrichtung (40) an der Säscharaufhängung (14) und an dem Tragarm (32) befestigt ist.

3. Scharanordnung (10) nach Anspruch 1 oder 2,
**dadurch gekennzeichnet, dass** die längenveränderliche Kopplungseinrichtung (40) einen Hydraulikzylinder (56) umfasst.

4. Scharanordnung (10) nach einem der vorstehenden Ansprüche,
**dadurch gekennzeichnet, dass** die Kopplungseigenschaften der längenveränderlichen Kopplungseinrichtung (40) einstellbar sind.

5. Scharanordnung (10) nach Anspruch 4,
**dadurch gekennzeichnet, dass** die Maximallänge und/oder die Minimallänge der längenveränderlichen Kopplungseinrichtung (40) einstellbar ist.

6. Scharanordnung (10) nach Anspruch 4 oder 5,
**dadurch gekennzeichnet, dass** der Anlenkpunkt der längenveränderlichen Kopplungseinrichtung (40) an der Säscharaufhängung (14) und/oder an dem Tragarm (32) veränderbar ist.

7. Scharanordnung (10) nach einem der Ansprüche 4 bis 6,
**dadurch gekennzeichnet, dass** die längenveränderliche Kopplungseinrichtung (40) eine Druckkraft zwischen der Säscharaufhängung (14) und dem Tragarm (32) verursacht, wobei die Druckkraft vorzugsweise einstellbar ist.

8. Scharanordnung (10) nach einem der vorstehenden Ansprüche,
**dadurch gekennzeichnet, dass** die Säscharaufhängung (14) ein Parallelogramm-Gestänge umfasst.

9. Scharanordnung (10) nach Anspruch 8,
**dadurch gekennzeichnet, dass** das Parallelogramm-Gestänge einen Oberlenker (26) und einen Unterlenker (28) umfasst, wobei die längenveränderliche Kopplungseinrichtung (40) mit dem Unterlenker (28) verbunden ist.

10. Sämaschine, mit
- einer oder mehreren Scharanordnungen (10),
**dadurch gekennzeichnet, dass** die eine oder die mehreren Scharanordnungen (10) jeweils nach einem der vorstehenden Ansprüche ausgebildet sind.

## Claims

1. Coulter arrangement (10) for a seed drill, having
- a sowing coulter (16) for depositing seed, wherein the sowing coulter (16) is fastened to a movable sowing coulter mount (14); and
- a fertilizer coulter (34) for depositing fertilizer, wherein the fertilizer coulter (34) is fastened to a movable support arm (32);
wherein the sowing coulter mount (14) and the support arm (32) are fastened to a common crossbeam (12); and
wherein the movement of the sowing coulter mount (14) and the movement of the support arm (32) are coupled together via a variable-length coupling device (40), **characterized in that** the variable-length coupling device (40) comprises a spring element (42).

2. Coulter arrangement (10) according to Claim 1, **characterized in that** the variable-length coupling device (40) is fastened to the sowing coulter mount (14) and to the support arm (32).

3. Coulter arrangement (10) according to Claim 1 or 2,
**characterized in that** the variable-length coupling device (40) comprises a hydraulic cylinder (56).

4. Coulter arrangement (10) according to one of the preceding claims,
**characterized in that** the coupling properties of the variable-length coupling device (40) are settable.

5. Coulter arrangement (10) according to Claim 4,
**characterized in that** the maximum length and/or the minimum length of the variable-length coupling device (40) is/are settable.

6. Coulter arrangement (10) according to Claim 4 or 5,
**characterized in that** the articulation point of the variable-length coupling device (40) on the sowing coulter mount (14) and/or on the support arm (32) is variable.

7. Coulter arrangement (10) according to one of Claims 4 to 6,
**characterized in that** the variable-length coupling device (40) brings about a pressure force between the sowing coulter mount (14) and the support arm (32), wherein the pressure force is preferably settable.

8. Coulter arrangement (10) according to one of the preceding claims,
**characterized in that** the sowing coulter mount (14) comprises a parallelogram linkage.

9. Coulter arrangement (10) according to Claim 8,
**characterized in that** the parallelogram linkage comprises an upper link (26) and a lower link (28), wherein the variable-length coupling device (40) is connected to the lower link (28).

10. Seed drill having
- one or more coulter arrangements (10),
**characterized in that** the one or more coulter arrangements (10) are each configured according to one of the preceding claims.

## Revendications

1. Ensemble de socs (10) destiné à un semoir, l'ensemble de socs comprenant
- un soc à semence (16) destiné à déposer la semence, le soc à semence (16) étant fixé à une suspension de socs à semence mobile (14) ; et
- un soc à engrais (34) destiné à déposer l'engrais, le soc à engrais (34) étant fixé à un bras de support mobile (32) ;
la suspension de socs (14) et le bras de support (32) étant fixés à une barre transversale commune (12) ; et
le mouvement de la suspension de socs à semence (14) et le mouvement du bras de support (32) étant accouplés l'un à l'autre par le biais d'un dispositif d'accouplement de longueur variable (40), **caractérisé en ce que** le dispositif d'accouplement de longueur variable (40) comprend un élément à ressort (42).

2. Ensemble de socs (10) selon la revendication 1, **caractérisé en ce que** le dispositif d'accouplement de longueur variable (40) est fixé à la suspension de socs à semence (14) et au bras de support (32).

3. Ensemble de socs (10) selon la revendication 1 ou 2, **caractérisé en ce que** le dispositif d'accouplement de longueur variable (40) comprend un vérin hydraulique (56) .

4. Ensemble de socs (10) selon l'une des revendications précédentes,
**caractérisé en ce que** les propriétés d'accouplement du dispositif d'accouplement de longueur variable (40) sont réglables.

5. Ensemble de socs (10) selon la revendication 4,
**caractérisé en ce que** la longueur maximale et/ou la longueur minimale du dispositif d'accouplement de longueur variable (40) est réglable.

6. Ensemble de socs (10) selon la revendication 4 ou 5,
**caractérisé en ce que** le point d'articulation du dispositif d'accouplement de longueur variable (40) à la suspension de socs à semence (14) et/ou au bras de support (32) est variable.

7. Ensemble de socs (10) selon l'une des revendications 4 à 6,
**caractérisé en ce que** le dispositif d'accouplement de longueur variable (40) crée une force de pression entre la suspension de socs à semence (14) et le bras de support (32), la force de pression étant de préférence réglable.

8. Ensemble de socs (10) selon l'une des revendications précédentes,
**caractérisé en ce que** la suspension de socs à semence (14) comprend un ensemble de tringles montées en parallélogramme.

9. Ensemble de socs (10) selon la revendication 8,
**caractérisé en ce qu'**un ensemble de tringles montées en parallélogramme comprend un bras supérieur (26) et un bras inférieur (28), le dispositif d'accouplement de longueur variable (40) étant relié au bras inférieur (28) .

10. Semoir, avec un ou plusieurs ensembles de distribution (10), comprenant
- au moins un ensemble de socs (10),
**caractérisé en ce que** les au moins un ensemble de socs sont conçus chacun selon l'une des revendications précédentes.
